# FASCICULE DE BREVET EUROPEEN

(11) **EP 0 750 356 B1**
(45) Date de publication et mention de la délivrance du brevet: **01.09.1999**
(21) Numéro de dépôt: 96401359.3
(22) Date de dépôt: 20.06.1996
(51) Int. Cl.: H01L 41/09, H02N 2/02

(54) **Actionneur piézoélectrique de très haute précision**
Hochpräziser piezoelektrischer Antrieb
High precision piezoelectric actuator

(30) Priorité: 23.06.1995 FR 9507579
(43) Date de publication de la demande: 27.12.1996
(73) Titulaire: CSEM Centre Suisse d'Electronique et de Microtechnique S.A., 2007 Neuchâtel (CH)
(72) Inventeur: Niedermann, Philippe, 2000 Neuchatel (CH); Choffat, Hubert, 2014 Bole (CH)
(74) Mandataire: Caron, Gérard

(56) Documents cités:
- WO-A-93/19494

## Description

La présente invention est relative à un actionneur ou moteur linéaire piézo-électrique de haute précision.

Plus particulièrement, l'invention concerne les actionneurs à très haute précision capable de positionner ou de déplacer un objet avec une résolution ou une précision situées dans l'ordre de grandeur du nanomètre.

De tels moteurs sont utilisés pour manipuler de petits objets ou pour palper une surface, par exemple dans le domaine de la microbiologie ou dans celui des microscopes à effet tunnel ou les microscopes dits "à force atomique".

Un actionneur de Ce type est décrit dans la demande de brevet international WO 93/19 494. Il comprend une barre rigide usinée avec un état de surface parfaitement lisse et qui est destinée à être déplacée en respectant une très haute précision. Cette barre est montée sur un support fixe par l'intermédiaire de plusieurs transducteurs piézo-électriques capables de se déformer en cisaillement sous l'action d'une tension électrique. Comme les transducteurs piézo-électriques sont maintenus en contact de la barre avec un coefficient de frottement prédéterminé, leur déformation est capable de déplacer la barre.

Certains transducteurs piézoélectriques sont amenés à se déformer dans un sens, pendant que les autres transducteurs ne sont pas déformés et maintiennent ainsi la barre dans une position fixe. Lorsque tous les transducteurs se sont ainsi déformés dans le premier sens, on les déforme tous simultanément dans le sens opposé. La barre aura alors effectué un pas dans ce dernier sens.

Les déformations des transducteurs piézoélectriques sont provoquées par des tensions de commande appliquées respectivement sur les électrodes de chacun d'entre eux. Ces tensions de commande présentent une forme particulière avec un front montant raide, un palier de niveau élevé et une partie de décroissance relativement longue jusqu'à la valeur zéro. Les flancs raides des tensions se produisent successivement pendant chaque cycle de fonctionnement, puis les tensions se réduisent simultanément jusqu'à zéro pendant ce même cycle en suivant une allure à peu près parabolique, ce dont il résulte le régime de déformation décrit plus haut.

Ce mode de fonctionnement ne peut conduire qu'à un mouvement pas-à-pas de la barre et ne peut en aucun cas engendrer un mouvement continu. Or, dans un certain nombre de cas d'utilisation de ce genre d'actionneurs, il serait souhaitable de pouvoir déplacer un objet non pas de façon discontinue mais bien selon un mouvement à vitesse constante.

La présente invention a donc pour but de proposer une solution à ce problème en fournissant un actionneur du type brièvement décrit ci-dessus et pouvant engendrer, grâce à un réglage approprié des tensions de commande, soit un mouvement pas-à-pas, soit un mouvement à vitesse constante.

L'invention a donc pour objet un actionneur piézoélectrique destiné à déplacer un objet avec une très haute résolution, notamment de l'ordre de grandeur du nanomètre, comprenant en combinaison d'une part un support, une pluralité de transducteurs piézoélectriques solidaires de ce support et déformables en cisaillement sous l'action de tensions de commande et un élément de poussée destiné à être couplé audit objet pour en assurer les déplacements et agencé pour être en contact de frottement avec une surface de chacun desdits transducteurs piézoélectriques, surface qui est mobile en vertu de la déformation en cisaillement du transducteur considéré, et d'autre part un générateur électrique pour engendrer lesdites tensions de commande, caractérisé en ce que les tensions de commande engendrées par ledit générateur ont toutes une forme d'onde générale en dents de scie, avec dans chaque cycle d'abord une partie à faible pente de durée tl, puis une partie à forte pente de durée t₂ < t₁, lesdites tensions étant déphasées les unes par rapport aux autres et appliquées auxdits transducteurs piézoélectriques de manière qu'à un instant considéré du fonctionnement de l'actionneur, une majorité desdits transducteurs reçoive ladite portion à petite pente de leur tension de commande et une minorité reçoive ladite portion à grande pente de cette tension.

Il résulte de ces caractéristiques que l'élément de poussée peut être déplacé en continu à une vitesse constante étant en permanence sollicité dans un sens d'avancement déterminé par ceux (la majorité) des transducteurs qui reçoivent la portion à faible pente de leur tension de commande.

Toutefois, on verra dans la suite de la description que ces caractéristiques n'empêchent pas de choisir un régime de mouvement discontinu ou pas-à-pas de l'élément de poussée.

D'autres caractéristiques et avantages de l'invention apparaîtront au cours de la description qui va suivre, donnée uniquement à titre d'exemple et faite en se référant aux dessins annexés sur lesquels:
- la figure 1 est une représentation schématique d'un actionneur selon l'invention;
- la figure 2 montre une vue schématique en bout de la partie mécanique d'un mode de construction préférentiel de l'actionneur selon l'invention;
- la figure 3 est une représentation graphique de la tension appliquée à chaque plaquette ou groupe de plaquettes piézoélectriques dans l'actionneur selon l'invention;
- la figure 3A montre une variante de la forme de la tension appliquée à chaque plaquette;
- la figure 4 est un schéma d'un générateur de formes d'ondes utilisé dans l'actionneur selon l'invention de la figure 1;
- la figure 5 est un diagramme des temps montrant les signaux de commande mis en oeuvre dans l'actionneur selon l'invention représenté sur la figure 1;
- la figure 6 est un schéma d'un générateur de formes d'ondes conçu selon un mode de réalisation avantageux de l'invention.

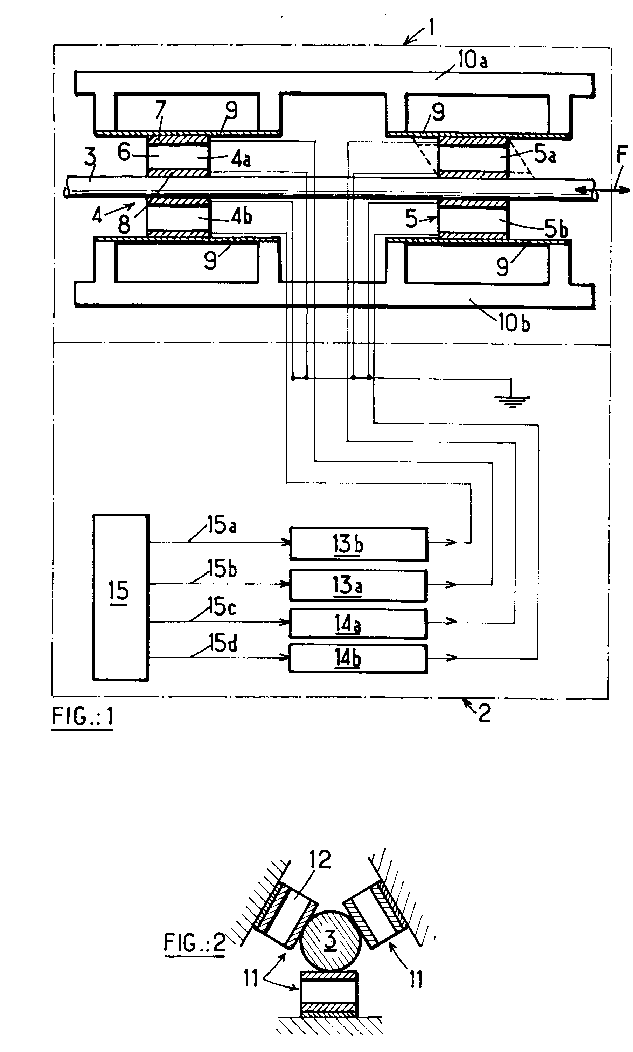

L'actionneur selon l'invention comprend une partie mécanique 1 et une partie électronique 2 qui sont dessinées respectivement dans deux rectangles en traits mixtes sur la figure 1.

La partie mécanique 1 comprend un élément de poussée 3 qui peut revêtir toute forme appropriée pour exercer une force de déplacement sur un objet (non représenté). Pour fixer les idées, celui-ci peut être le porte-échantillon d'un microscope, par exemple. Sa direction de mouvement est celle de la double flèche F.

De préférence, l'élément de poussée 3 présente une forme allongée, comme une barre dont la section peut être circulaire, rectangulaire, triangulaire etc. Cet élément peut être réalisé en un matériau isolant dur, soigneusement rectifié avec une grande précision. Un matériau approprié est le saphir.

Dans le mode de réalisation représenté, l'élément de poussée 3 est de section circulaire et pris entre deux jeux 4 et 5 de deux transducteurs piézoélectriques respectivement 4a, 4b et 5a, 5b qui ont ici une forme de plaquette.

Chacune de ces plaquettes comporte un corps piézoélectrique 6 dont la forme est celle d'un parallélépipède rectangle revêtu sur deux de ces grandes faces opposées d'électrodes 7 et 8 agencées pour qu'une tension de commande puisse leur être appliquée.

Les plaquettes 4a, 4b et 5a, 5b sont fixées, par exemple par collage, sur la partie médiane de lames élastiques 9 qui sont solidaires à leur tour de montures fixes 10a et 10b et agencées de telle manière que les plaquettes soient appuyées avec une certaine contrainte élastique sur l'élément de poussée 3. L'électrode 8 qui est en contact avec l'élément de poussée est une mince feuille en un matériau conducteur dur.

Les plaquettes 4a, 4b et 5a, 5b sont déformables en cisaillement, lorsqu'une tension électrique est appliquée à leurs électrodes 7 et 8. A partir d'une section rectangulaire, comme vu sur la figure 1, leur section prend alors la forme d'un parallélogramme ce qui est schématisé pour ce qui concerne la plaquette 5a par des traits pointillés sur la figure 1. Dans l'actionneur selon l'invention, cet effet de déformation est exploité
- d'une part pour faire avancer l'élément de poussée 3, la surface de la plaquette en contact avec ce dernier le poussant dans un sens donné. Ceci vaut pour la majorité des plaquettes à tout instant considéré du fonctionnement de l'actionneur;
- et d'autre part pour faire reculer la même surface d'une minorité des plaquettes dans le sens opposé, cette surface se déplaçant alors par rapport à l'élément de poussée 3 en glissant par rapport à celui-ci, car cette minorité de plaquettes sera incapable de contrecarrer le mouvement d'avance engendré par la déformation de la majorité des plaquettes.

On verra plus loin dans la description que l'application de la tension électrique à chacune des plaquettes ou à chaque groupe de plaquettes est cyclique selon des règles prédéterminées.

Il est à noter en outre que le sens de variation de la tension appliquée détermine le sens de déformation des plaquettes et, partant, du sens de mouvement de l'élément de poussée 3.

Il s'est avéré que les plaquettes piézoélectriques fabriquées sous la référence PZT™-5A par Vernitron Limited, Thornhill, Soushampton, Grande Bretagne SO9 5QF, sont particulièrement appropriées pour la mise en oeuvre de l'invention. Elles ont une dimension de 10x10x1 mm.

On a représenté sur la figure 2 un mode de construction préféré de la partie mécanique de l'actionneur qui dans ce cas comporte deux jeux 11 (dont seulement un jeu est visible sur la figure) de trois plaquettes 12 placées en étoile autour de l'élément de poussée 3 qui est ici de section circulaire également.

Les tensions électriques de commande des plaquettes 3 sont engendrées dans un générateur de tensions de commande, qui constitue la partie électronique 2 de l'actionneur.

Dans le cas d'une partie mécanique à quatre plaquettes (comme sur la figure 1), ce générateur 2 comporte quatre circuits 13a, 13b et 14a, 14b de production des quatre tensions de commande de ces plaquettes. Ces circuits sont rythmés par un circuit d'horloge 15 fournissant quatre signaux d'horloge C11 à C14, respectivement sur quatre sorties 15a à 15d de ce circuit.

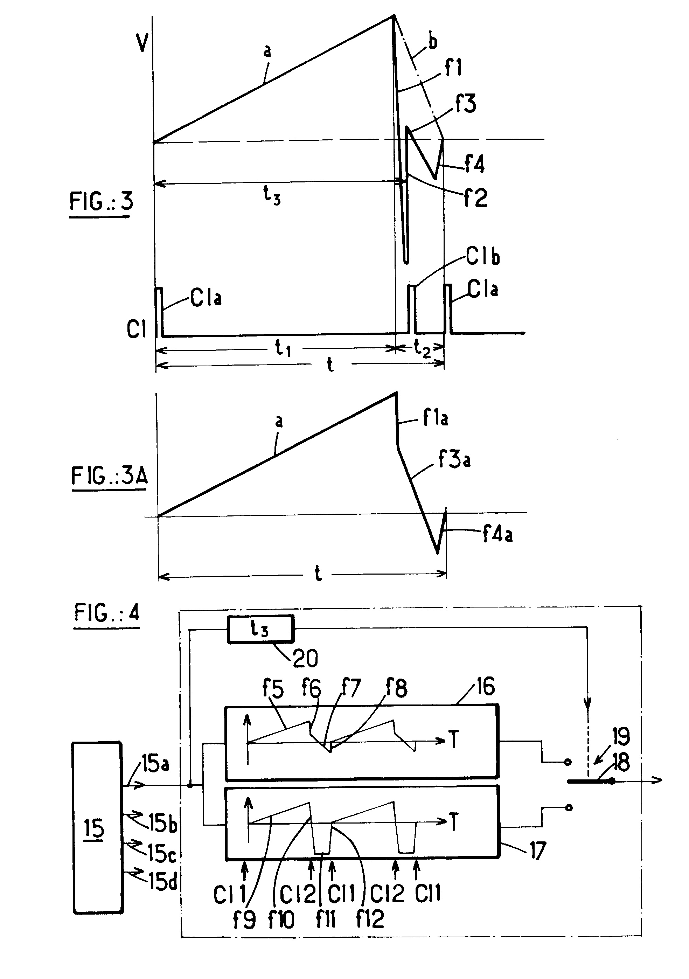

Selon l'invention, chaque plaquette ou groupe de plaquettes est commandé par une tension V ayant globalement la forme d'une dent de scie de période t. Chaque période t de cette tension comporte d'abord une partie à faible pente a, par exemple croissante de durée t1, puis une partie à forte pente b, par exemple décroissante et de durée t2. La forme globale de cette tension V est représentée en traits mixtes sur la figure 3.

Comme déjà indiqué ci-dessus, la tension V peut varier de façon inverse dans chacun de ces cycles, la partie à faible pente étant alors décroissante et la partie à forte pente croissante. Dans ce dernier cas, le sens du mouvement de l'élément de poussée 3 sera inversé.

Chaque cycle de la tension V permet ainsi de déformer chaque plaquette en cisaillement selon une loi à peu près linéaire pendant la partie a de sa courbe, puis de faire en sorte que la plaquette revienne à sa forme initiale pendant la partie b de cette courbe.

En outre, selon l'invention, à chaque instant du fonctionnement de l'actionneur, les plaquettes ou groupes de plaquettes n sont répartis en une majorité de nombre s et une minorité de nombre n-s. Si la durée de l'intervalle t1 de la période (partie croissante a de la courbe) est égale à sΔt, Δt étant la durée d'un intervalle de temps élémentaire, l'intervalle t2 sera égal à (n-s)Δt. Dans ces conditions, le déphasage de la tension V appliquée aux différents plaquettes ou groupes de plaquettes sera égal à la durée Δt d'un intervalle de temps élémentaire. On comprend que de ce fait, la composition de la majorité, et bien entendu de la minorité des plaquettes ou groupes de plaquette change à chaque début de la durée Δt.

En commandant ainsi les plaquettes ou groupes de plaquettes, il y a toujours une majorité de plaquettes qui entraîne la barre 3 dans un premier sens à une vitesse constante, tandis qu'une minorité de plaquettes ou groupe de plaquettes est en train de retrouver la configuration initiale en glissant dans le sens opposé par rapport à la surface de la barre 3. Ceci a pour conséquence que la barre 3 se déplace en continue à une vitesse prédéterminée dans le premier sens.

Il est à noter que n est au moins égal à 3 et s au moins égal à 2. Par ailleurs, un groupe de plaquettes peut en principe comprendre un nombre quelconque de plaquettes choisi en fonction de la puissance avec laquelle on souhaite faire avancer la barre 3.

Chaque période de la tension de commande V est déclenchée par une première impulsion d'horloge Cla qui est produite par le circuit d'horloge 15.

Selon une caractéristique particulière de l'invention, il est préférable de profiler la forme de la partie b de la courbe d'une façon particulière afin de compenser l'influence de l'élasticité des plaquettes. Ainsi, la figure 3 représente en traits pleins, l'une des formes possibles de la courbe de la tension V qui présente dans ce cas une pointe de tension définie par un flanc descendant f1 très raide immédiatement après avoir atteint la valeur maximale et par un flanc raide f2 de sens opposé, d'amplitude moins importante. Cette pointe est suivie d'une portion de courbe f3 de sens descendant qui correspond à la reprise de la forme initiale de la plaquette. Le profil se termine par une partie f4 de sens ascendant qui ramène la tension à sa valeur initiale (qui n'est pas nécessairement égale à zéro).

La figure 3A montre une autre forme possible de la tension V qui demeure globalement la même que celle de la tension composée des pentes a et b, comme précédemment, mais qui comporte dans ce cas un flanc f1a brusquement descendant suivi d'une pente f3a, sans qu'il y ait une pointe de tension inverse comme dans la forme d'onde de la figure 3. A la fin de cette pente f3a, la tension revient à la valeur initiale par une pente inverse f4a. Cette forme d'onde a pour effet qu'après achèvement de la pente a, la tension V est brusquement réduite pour appliquer une contrainte sur la plaquette dans le sens du glissement, avant qu'elle ne glisse réellement par rapport à la barre 3.

La tension V est engendrée par le circuit représenté sur la figure 4 qui forme l'un des circuits de production de tension 13a, 13b et 14a, 14b du schéma de la figure 1.

Chacun de ces circuits de production de tension comporte un premier formateur d'onde 16 qui engendre une onde de période t dont chaque période comporte une pente f5 de même allure que celle de la portion a de la tension V de la figure 3. Cette pente est suivie d'un flanc descendant raide f6 d'amplitude relativement faible, d'une portion en pente f7 de même allure que la portion f3 de la tension V et une portion ascendante raide f8 qui ramène la courbe à la valeur initiale à la fin de la période t.

Le circuit de production de tension comporte un second formateur d'onde 17 engendrant une onde également de période t avec une première pente f9 de même allure que les pentes a et f5. Cette pente est suivie d'un flanc raide f10 d'amplitude relativement importante correspondant à celle du flanc f1 de la figure 3. Ce flanc est suivi d'une portion en palier f11 suivie d'une portion ascendante f 12 qui ramène l'onde à la valeur initiale à la fin de la période t.

Les deux formateurs 16 et 17 sont synchronisés par le circuit d'horloge 15 par l'intermédiaire des sorties 15a à 15d correspondantes. Les sorties des deux formateurs 16 et 17 sont transférées au point 18 qui forme le contact mobile d'un interrupteur 19 dont les contacts fixes sont connectés aux sorties respectives des deux formateurs 16 et 17. De préférence, l'interrupteur 19 est réalisé sous forme intégrée. Il est commandé par un signal d'horloge Clb dérivé du signal d'horloge Cla par l'intermédiaire d'un circuit à retard 20 imposant dans chaque cycle de la tension V un retard de durée t3 de l'impulsion Clb par rapport à l'impulsion Cla (voir figure 3).

Au début de chaque cycle de la tension V, l'impulsion d'horloge Cla commande l'interrupteur de manière que la forme d'onde du formateur 17 soit appliquée sur le point 18. Puis, à la fin de la durée t3 qui coïncide avec un point déterminé du flanc f10 de la forme d'onde produite dans le formateur 17 (point qui est fixé expérimentalement ou, selon un mode de réalisation préféré, par régulation; voir plus loin dans la description), le circuit à retard 20 applique l'impulsion d'horloge Clb à l'interrupteur 19 qui applique alors la tension du formateur 16 au point 18. Il en résulte la tension composée V représentée en traits pleins sur la figure 3.

Les spécialistes en électronique sauront réaliser les circuits adéquats permettant d'engendrer la tension V telle que décrite ci-dessus, soit au moyen du circuit de production de tension représenté sur la figure 4, soit par un circuit alternatif dont la réalisation est à leur portée en considérant la forme d'onde représentée sur la figure 3.

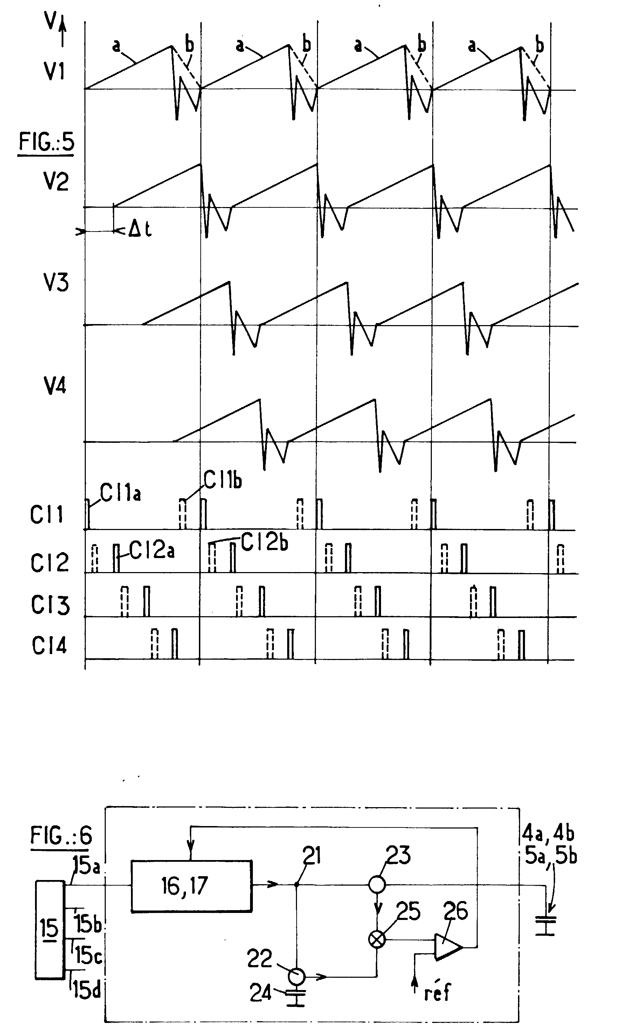

La figure 5 est un diagramme des temps montrant pour l'actionneur piézoélectrique de la figure 1, les relations temporelles de quatre tensions V1 à V4 de forme identique à celle de la tension V de la figure 3, mais déphasées de la valeur Δt telle que définie ci-dessus. De ce fait, en considérant la figure 1, parmi les plaquettes 4a, 4b et 5a, 5b, il y en aura toujours trois (la majorité) qui se déformeront pour faire avancer la barre 3 et une (la minorité) pour reprendre sa forme initiale.

On remarquera que dans le cas de la figure 5, le mouvement de la barre 3 sera effectué à vitesse constante; toutefois, il est possible de rendre ce mouvement discontinu (mouvement pas-à-pas) en espaçant dans le temps les cycles de fonctionnement tels qu'ils apparaissent sur la figure 5.

La figure 6 montre un mode de réalisation particulièrement avantageux de l'invention permettant de déterminer avec précision l'instant auquel l'interrupteur 19 doit basculer de la forme d'onde produite par le formateur 17 vers celle du formateur 16 dans chaque cycle de la tension V. Le circuit de régulation 21 de cette figure 6 remplace donc avantageusement le circuit à retard 20 représenté sur la figure 4. Il est utilisé pour chaque plaquette ou groupe de plaquettes de l'actionneur selon l'invention.

Les formateurs 16 et 17 sont identiques à ceux déjà décrits ci-dessus et sont connectés au point de sommation 18 à travers l'interrupteur 19. Le point de sommation 18 est connecté à un noeud 21 qui est raccordé à deux détecteurs de courant 22 et 23.

Le détecteur de courant 22 mesure le courant absorbé par une capacité de référence 24 et envoie le signal correspondant à une première entrée d'un amplificateur de différence 25.

Le détecteur de courant 23 mesure le courant absorbé par la plaquette piézoélectrique considérée 4a, 4b, 5a ou 5b et fournit le signal de mesure correspondant à la seconde entrée de l'amplificateur de différence 25.

La sortie de l'amplificateur de différence 25 est appliquée à la première entrée d'un comparateur 26 qui reçoit sur son autre entrée un signal de référence constant. Lorsque la différence des deux courants, constatée par l'amplificateur 15, dépasse cette valeur de référence, une impulsion est engendrée pour faire basculer l'interrupteur 18 de la position dans laquelle il transmettait la forme d'onde du formateur 17 vers la position dans laquelle il transmet le signal du formateur 16 au point de sommation 19.

Ce circuit de commande est basé sur le principe selon lequel une plaquette piézoélectrique qui se comporte comme une capacité, présente une constante diélectrique différente selon qu'elle est sous contrainte (dans le présent cas le régime d'avance de la barre 3) ou libre (dans le cas présent le régime de glissement de la plaquette par rapport à la barre 3). Or, la valeur de la constante présente une brusque variation au passage d'un régime à l'autre. Cette variation de capacité est détectée dans le montage que l'on vient de décrire.

## Revendications

1. Actionneur piézoélectrique destiné à déplacer un objet avec une très haute résolution, notamment de l'ordre de grandeur du nanomètre, comprenant en combinaison d'une part un support (10a, 10b), une pluralité de transducteurs piézoélectriques (4a, 4b, 5a, 5b; 12) solidaires de ce support et déformables en cisaillement sous l'action de tensions de commande (V, V1 à V4) et un élément de poussée (3) destiné à être couplé audit objet pour en assurer les déplacements et agencé pour être en contact de frottement avec une surface de chacun desdits transducteurs piézoélectriques (4a, 4b, 5a, 5b; 12), surface qui est mobile en vertu de la déformation en cisaillement du transducteur considéré (4a, 4b, 5a, 5b; 12), et d'autre part un générateur électrique (2) pour engendrer lesdites tensions de commande, caractérisé en ce que les tensions de commande (V, V1 à V4) engendrées par ledit générateur (2) ont toutes une forme d'onde générale en dents de scie (a, b), avec dans chaque cycle d'abord une partie à faible pente de durée t₁, puis une partie à forte pente de durée t₂<t₁, lesdites tensions étant déphasées les unes par rapport aux autres (Δt) et appliquées auxdits transducteurs piézoélectriques (4a, 4b, 5a, 5b; 12) de manière qu'à un instant considéré du fonctionnement de l'actionneur, une majorité desdits transducteurs piézoélectriques reçoive ladite portion (a) à faible pente de leur tension de commande et une minorité reçoive ladite portion (b) à forte pente de cette tension (V, V1 à V4).

2. Actionneur suivant la revendication 1, caractérisé en ce qu'il comporte au moins trois transducteurs piézoélectriques (4a, 4b, 5a, 5b; 12).

3. Actionneur suivant la revendication 1, caractérisé en ce qu'il comporte au moins trois groupes de transducteurs ayant chacun un même nombre de transducteurs.

4. Actionneur suivant l'une quelconque des revendications 1 à 3, caractérisé en ce que chaque période de ladite tension de commande (V) comporte une portion (f1a) à très forte pente immédiatement après achèvement de la portion ascendant (a) à faible pente et suivie de ladite portion à forte pente (f3a).

5. Actionneur suivant l'une quelconque des revendications 1 à 4, caractérisé en ce que ledit générateur de tension (2) comporte des moyens (15, 20; 15, 22 à 26) pour déterminer l'instant dans chaque dent de scie de ladite tension de commande (V, V1 à V4) où commence ladite portion à forte pente (f3).

6. Actionneur suivant la revendication 5, caractérisé en ce que lesdits moyens pour déterminer ledit instant comprennent des moyens de réglage (15, 22 à 26) pour fixer ledit instant en fonction de la valeur de la capacité de chaque transducteur piézoélectrique.

## Patentansprüche

1. Piezoelektrischer Antrieb zum Verschieben eines Gegenstandes mit einer sehr hohen Auflösung, insbesondere in der Größenordnung von Nanometern, der in Kombination aufweist: einerseits einen Träger (10a, 10b), mehrere piezoelektrische Wandler (4a, 4b, 5a, 5b; 12), die mit dem Träger fest verbunden und durch Steuerspannungen (V, VI bis V4) unter Scherbeanspruchung verformbar sind, und ein Schubglied (3), das zum Verschieben des Gegenstandes mit diesem verbindbar und so ausgebildet ist, daß es mit einer Oberfläche jedes der piezoelektrischen Wandler (4a, 4b, 5a, 5b; 12) in Reibkontakt steht, einer Oberfläche, die als Folge der unter Scherbeanspruchung erfolgenden Formung des betreffenden Wandlers (4a, 4b, 5a, 5b; 12) bewegbar ist, und andererseits einen elektrischen Generator (2) zum Erzeugen der Steuerspannungen, dadurch gekennzeichnet, daß die von dem Generator (2) erzeugten Steuerspannungen (V, V1 bis V4) eine Wellenform mit einem Sägezahnverlauf (a, b) haben, und zwar in jedem Zyklus zunächst mit einem Abschnitt mit kleiner Steilheit für die Dauer t₁ und dann mit einem Abschnitt mit großer Steilheit für die Dauer t₂<t₁, wobei die Spannungen zueinander phasenverschoben sind (Δt) und an die piezoelektrischen Wandler (4a, 4b, 5a, 5b; 12) so angelegt werden, daß zu jedem Zeitpunkt im Betrieb des Antriebes eine Mehrzahl der piezoelektrischen Wandler den Abschnitt (a) kleiner Steilheit ihrer Steuerspannung und eine geringere Anzahl den Abschnitt (b) großer Steilheit dieser Spannung (V, V1 bis V4) empfängt.

2. Antrieb nach Anspruch 1, dadurch gekennzeichnet, daß er mindestens drei piezoelektrische Wandler (4a, 4b, 5a, 5b; 12) aufweist.

3. Antrieb nach Anspruch 1, dadurch gekennzeichnet, daß er mindestens drei Gruppen von Wandlern aufweist, die jeweils die gleiche Anzahl von Wandlern umfassen.

4. Antrieb nach einem der Ansprüche 1 bis 3, dadurch gekennzeichnet, daß jede Periode der Steuerspannung (V) einen Abschnitt (f1a) mit sehr großer Steilheit unmittelbar nach Erreichen des ansteigenden Abschnitts (a) mit geringer Steilheit und gefolgt von dem Abschnitt mit großer Steilheit (f3a) aufweist.

5. Antrieb nach einem der Ansprüche 1 bis 4, dadurch gekennzeichnet, daß der Spannungsgenerator (2) Mittel (15, 20; 15, 22 bis 26) zum Bestimmen des Zeitpunktes in jedem Zahn des Sägezahnverlaufs der Steuerspannung (V, V1 bis V4), in dem der Abschnitt mit großer Steilheit (f3) beginnt, aufweist.

6. Antrieb nach Anspruch 5, dadurch gekennzeichnet, daß die Mittel zum Bestimmen des besagten Zeitpunktes Regelungsmittel (15, 22 bis 26) zum Festlegen des besagten Zeitpunktes in Abhängigkeit von der Kapazität jedes piezoelektrischen Wandlers aufweisen.

## Claims

1. Piezoelectric actuator intended to move an object with very high resolution, in particular of the order of magnitude of a nanometer, comprising in combination, on the one hand, a support (10a, 10b), a plurality of piezoelectric transducers (4a, 4b, 5a, 5b; 12) which are secured to this support and can be deformed in shear mode under the action of drive voltages (V, V1 to V4) and a thrust element (3) which is intended to be coupled to the said object in order to move it and is designed to be in frictional contact with one surface of each of the said piezoelectric transducers (4a, 4b, 5a, 5b; 12), which surface can move by virtue of the shear deformation of the transducer in question (4a, 4b, 5a, 5b; 12) and, on the other hand, an electrical generator (2) for generating the said drive voltages, characterized in that the drive voltages (V, V1 to V4) generated by the said generator (2) all have a sawtooth general waveform (a, b) with, in each cycle, first a part with shallow slope and duration t₁, than a part with steep slope and duration t₂ < t₁, the said voltages being phase-shifted relative to one another (Δt) and being applied to the said piezoelectric transducers (4a, 4b, 5a, 5b; 12) in such a way that, at any given time during the operation of the actuator, a majority of the said piezoelectric transducers receives the said shallow-slope portion (a) of their drive voltage and a minority receives the said steep-slope portion (b) of this voltage (V, V1 to V4).

2. Actuator according to Claim 1, characterized in that it comprises at least three piezoelectric transducers (4a, 4b, 5a, 5b; 12).

3. Actuator according to Claim 1, characterized in that it comprises at least three groups of transducers, each having the same number of transducers.

4. Actuator according to any one of Claims 1 to 3, characterized in that each period of the said drive voltage (V) comprises a portion (fla) with very steep slope which comes immediately after the end of the rising portion (a) with shallow slope and is followed by the said portion (f3a) with steep slope.

5. Actuator according to any one of Claims 1 to 4, characterized in that the said voltage generator (2) comprises means (15, 20; 15, 22 to 26) for determining the time in each sawtooth of the said drive voltage (V, V1 to V4) at which the said portion (f3) with steep slope starts.

6. Actuator according to Claim 5, characterized in that the said means for determining the said time comprise control means (15, 22 to 26) for fixing the said time on the basis of the value of the capacitance of each piezoelectric transducer.
